# EUROPEAN PATENT SPECIFICATION

(11) **EP 3 076 277 B1**
(45) Date of publication and mention of the grant of the patent: **13.03.2019**
(21) Application number: 14868840.1
(22) Date of filing: 12.12.2014
(51) Int. Cl.: G06F 3/0485, G06F 3/0488

(54) **METHOD AND DEVICE FOR MOVING PAGE CONTENT**
VERFAHREN UND VORRICHTUNG ZUM BEWEGEN VON SEITENINHALT
PROCÉDÉ ET DISPOSITIF DE DÉPLACEMENT DE CONTENU DE PAGE

(30) Priority: 12.12.2013 CN 201310676476
(43) Date of publication of application: 05.10.2016
(73) Proprietor: Huawei Device (Dongguan) Co., Ltd., Dongguan, Guangdong, PRC, 523808 (CN)
(72) Inventor: WANG, Hongjun, Shenzhen Guangdong 518129 (CN); YANG, Zhiyan, Shenzhen Guangdong 518129 (CN); HAO, Huaqi, Shenzhen Guangdong 518129 (CN)
(74) Representative: Thun, Clemens
(86) International application number: PCT/CN2014/093646
(87) International publication number: WO 2015/085944

(56) References cited:
- EP-A1- 2 645 222
- WO-A1-2013/035229
- CN-A- 102 830 914
- CN-A- 103 019 565
- CN-A- 103 019 601
- CN-A- 103 744 589
- US-A1- 2007 150 830

## Description

### TECHNICAL FIELD

The present invention relates to the computer field, and in particular, to a method and an apparatus for moving page content.

### BACKGROUND

With the continuous development of touch screen technologies, sizes of display screens of mobile terminals are increasing, which facilitates viewing of content on a mobile terminal, but makes it more difficult for a user to perform a one-hand operation on a mobile terminal. In the prior art, on a mobile terminal with a large touch screen, when it is detected that display content reaches a bottom or top of the page content, a user cannot further perform a slide operation on a page, and it is inconvenient for the user to perform a left or right hand operation. Alternatively, after receiving a trigger instruction from a user, a mobile terminal may scale down content on a whole page to a lower left corner or a lower right corner of a display screen according to a preset percentage, so that the user performs a left or right hand operation. However, scaling down page content to a corner of a screen according to a preset percentage may cause a waste of other blank display space of the screen, and affects visual aesthetics. In addition, when page content is scaled down according to a preset percentage, the page content is also scaled down according to the preset percentage, which makes it inconvenient to perform viewing and touch operations, thereby degrading one-hand operation experience of a user. For example, EP 2 645 222A1 refers to a portable electronic apparatus, scroll processing method and scroll processing program.

### SUMMARY

Embodiments of the present invention provide a method and an apparatus for moving page content.
According to a first aspect, a method for moving page content is provided, wherein the method comprises: acquiring an initial display position of page content if it is detected that display content reaches a bottom or top of the page content;
acquiring a slide operation of a user on the page content;
determining a preset direction and a magnitude of moving displacement according to the displacement of the slide operation on the page content if it is detected that the displacement of the slide operation on the page content is greater than a preset slide displacement;
determining a target position according to the determined preset direction and the determined magnitude of the moving displacement;
determining a preset position corresponding to a preset position threshold as a target display position if releasing of the slide operation on the page content is detected and it is detected that the target position meets the preset position threshold;
moving the page content from the initial display position to the target display position in a one-hand operation area according to the determined preset direction and the determined magnitude of the moving displacement;
displaying the page content at the target display position;
moving the page content in a direction opposite to the preset direction at a preset first speed when a page return instruction of the user in the one-hand operation area is received.

In a first implementation form of the first aspect the preset direction comprises a vertical direction or a horizontal direction; and the magnitude of the moving displacement comprises a product of a preset proportion factor and the displacement of the slide operation on the page content.
In a second implementation form of the first aspect the page content comprises page content in a preset area of a display screen or page content in all areas of the display screen. According to a second aspect an apparatus is provided configured to perform any of the methods mentioned above.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a method for moving page content according to a first example;
FIG. 2 is a flowchart of a method for moving page content according to a second example;
FIG. 3 is a flowchart of a method for moving page content according to a third example;
FIG. 4 is a flowchart of a method for moving page content according to an embodiment of the present invention;
FIG. 5 is a schematic structural diagram of an apparatus for moving page content according to an embodiment of the present invention;
FIG. 6 is a schematic structural diagram of a mobile terminal according to an embodiment of the present invention; and
FIG. 7 is a schematic diagram of moving page content according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

An apparatus for moving page content according to the embodiments of the present invention may include but is not limited to a mobile terminal such as a mobile phone, a tablet, or a personal digital assistant (PDA, Personal Digital Assistant, also called a palmtop computer). The embodiments of the present invention provide a method and an apparatus for moving page content, where the method and apparatus may be applied to a page that can be displayed on a display screen, for example, a communications application, a browser application, or page setting on a mobile terminal. In the prior art, on a mobile terminal with a large touchscreen, when it is detected that display content reaches a bottom or top of page content, a user cannot further perform a slide operation on a page, and it is inconvenient for the user to perform a left or right hand operation. Alternatively, after receiving a trigger instruction from a user, a mobile terminal scales down content on a whole page to a lower left corner or a lower right corner of a display screen according to a preset percentage, and scales down display content according to the preset percentage, but the page content is also scaled down according to the preset percentage, which makes it inconvenient to perform viewing and touch operations. In examples, when it is detected that display content reaches a bottom or top of page content, the page content may be moved in a preset direction to a one-hand operation area according to a moving instruction, and a display percentage of the page content is not changed, which facilitates viewing and one-hand operations for a user.

In an optional implementation manner, in the embodiments of the present invention, it is detected that display content reaches a bottom or top of page content, that is, display content on a current display screen has already reached a bottom or top of page content. In the embodiments of the present invention, the display content refers to content displayed on a display screen of a mobile terminal, and the page content includes but is not limited to page content in a preset area of the display screen or page content in all areas of the display screen, or the page content may be content of a whole page such as a webpage or an application program list, and the page content in all the areas of the display screen includes content in a status bar area. Specifically, if the page content may be displayed completely on one page of the display screen of the mobile terminal, the display content may be the same as the page content; or if the page content cannot be displayed completely on one page of the display screen of the mobile terminal, the display content may be different from the page content. For example, if the page content includes 20 lines in total, but one page of the display screen of the mobile terminal supports displaying of 15 lines, current display content is 15 lines, and remaining 5 lines cannot be viewed unless the user moves the page content up or down.

In examples, the page content may be moved to the one-hand operation area, and the page content may be moved from the one-hand operation area back to an initial display position at a preset first speed, where the page content that may be moved includes page content that is displayed on the display screen and other page content that cannot be displayed on the display screen.

In examples, on a mobile terminal with a large touchscreen, when it is detected that display content reaches a bottom or top of page content, the page content may be moved in a preset direction to a one-hand operation area according to a moving instruction, so that a user performs a one-hand operation in the one-hand operation area, thereby facilitating viewing and one-hand touch operations; and when a page return instruction is received, the page content is moved in a direction opposite to the preset direction at a preset first speed, and the page content may be moved from the one-hand operation area back to an initial display position at the preset first speed, thereby improving intelligence of the mobile terminal. Descriptions are provided in the following with reference to specific embodiments.

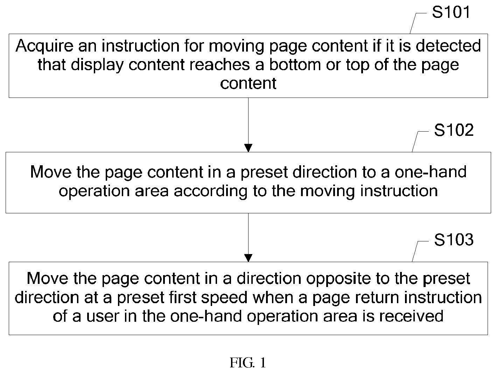

FIG. 1 is a flowchart of a method for moving page content according to a first example. The method for moving page content, as shown in FIG. 1, is described by using a mobile terminal as an execution body. A procedure in this example shown in the figure includes steps S101 to S103.

S101. Acquire an instruction for moving page content if it is detected that display content reaches a bottom or top of the page content.

S102. Move the page content in a preset direction to a one-hand operation area according to the moving instruction.

S103. Move the page content in a direction opposite to the preset direction at a preset first speed when a page return instruction of a user in the one-hand operation area is received.

In an optional implementation manner, in step S101, the instruction for moving the page content is acquired if it is detected that the display content reaches the bottom or top of the page content. Specifically, a slide operation of the user on the page content is acquired when it is detected that the display content reaches the bottom or top of the page content; and the acquired slide operation on the page content is determined as the moving instruction if it is detected that displacement of the slide operation on the page content is greater than preset slide displacement. The preset slide displacement is a preset editable displacement value P (P is greater than 0). Further optionally, change values of position coordinates of the slide operation of the user on the page content may be acquired. A magnitude of the displacement of the slide operation is obtained by means of calculation according to the change values of the position coordinates of the slide operation, and then it is detected whether the displacement of the slide operation on the page content is greater than the preset slide displacement, and if it is detected that the displacement of the slide operation on the page content is greater than the preset slide displacement, the acquired slide operation on the page content is determined as the moving instruction.

In an optional implementation manner, in step S102, the page content is moved in the preset direction to the one-hand operation area according to the moving instruction. Specifically, the preset direction and a magnitude of moving displacement are determined according to the displacement of the slide operation on the page content, and the one-hand operation area is determined according to the preset direction and the magnitude of the moving displacement. The preset direction may include a portrait direction or a landscape direction. If it is detected that the mobile terminal adopts a portrait mode, and it is detected that the direction of the displacement of the slide operation on the page content is up or down, it is correspondingly determined that the preset direction is vertical up or vertical down; if it is detected that the mobile terminal adopts a landscape mode, and it is detected that the direction of the displacement of the slide operation on the page content is left or right, it is correspondingly determined that the preset direction is horizontal left or horizontal right.

The magnitude of the moving displacement may include a product of a preset proportion factor and the displacement of the slide operation on the page content. The preset proportion factor is a preset editable value α (α is greater than 0), and the preset proportion factor may be specifically set for different mobile terminals. Further optionally, the page content may include page content in a preset area of a display screen or page content in all areas of a display screen.

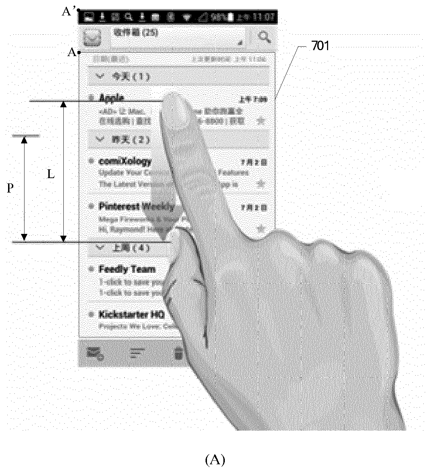

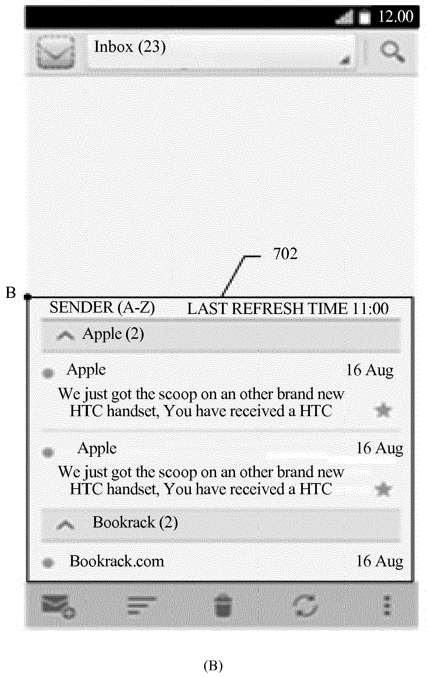

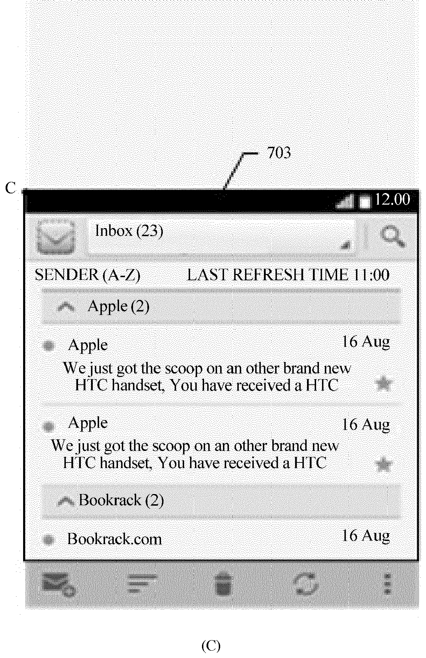

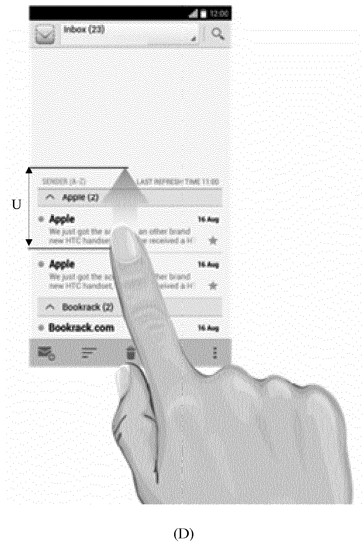

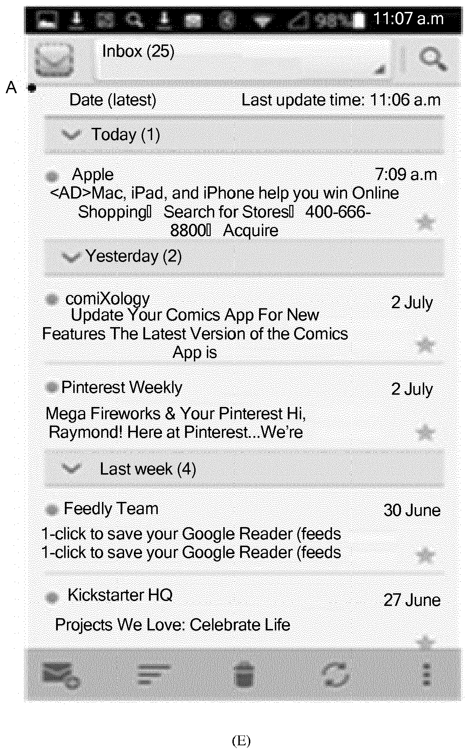

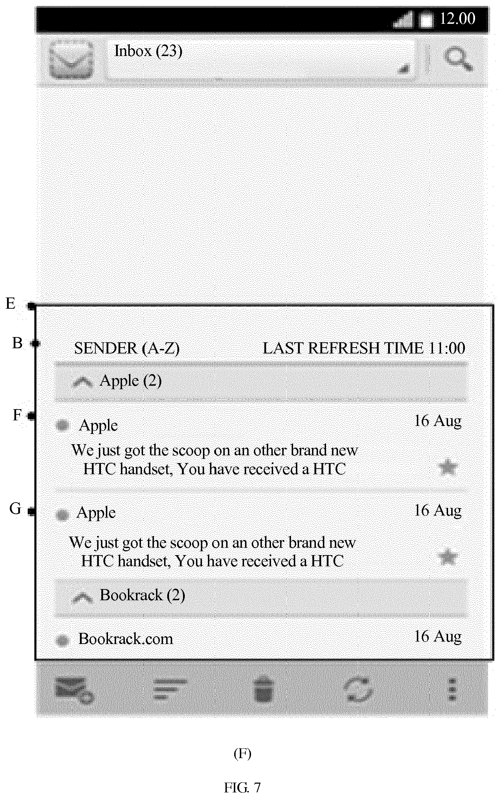

Further optionally, if the displacement of the slide operation on the page content is set to L, the magnitude of the moving displacement is S = L*α, and an initial display position of the page content is acquired, where the initial display position may be a preset position at the top of the page content. For example, if the page content is page content in all areas of a display screen, a position at a top (namely, a top of a status bar area) of the display screen may be set as the initial display position. Referring to FIG. 7, FIG. 7 is a schematic diagram of moving page content according to an embodiment of the present invention. As shown in FTG. 7 (A), if the page content is the page content in all the areas of the display screen, A' may be set as the initial display position. Further optionally, if the page content is page content in a preset area of a display screen, a preset position at a top of the preset area of the display screen may be set as the initial display position. As shown in FIG. 7 (A), if the page content is the page content in the preset area, that is, an area 701, of the display screen, A may be set as the initial display position. A target display position may be a position determined according to the preset direction and the magnitude of the moving displacement, and the target display position is in the one-hand operation area. Specifically, for example, coordinates of the initial display position of the page content may be acquired. Coordinates of the target display position may be determined according to the preset direction and the magnitude of the moving displacement, and an area that extends, in the preset direction, from the coordinates of the target display position to a bottom of the display screen is the one-hand operation area.

In an optional implementation manner, in step S103, the page content is moved in the direction opposite to the preset direction at the preset first speed when the page return instruction of the user in the one-hand operation area is received. Specifically, the page return instruction may include a return instruction that is received by the mobile terminal when the user performs operations such as a touch operation and a slide operation in any position in the one-hand operation area, or a return instruction that is received by the mobile terminal when the user touches a preset return button in the one-hand operation area, or the like. In other embodiments, the page return instruction is implemented in various manners, which is not specifically limited in this embodiment. After the page return instruction of the user in the one-hand operation area is received, the page content is moved in the direction opposite to the preset direction at the preset first speed, until it is detected that the page content is moved to the initial display position, where the preset first speed is a preset editable speed value V1, for example, V1 may be 2cm/s.

In an optional implementation manner, as shown in FIG. 7, FIG. 7 is a schematic diagram of moving page content according to an embodiment of the present invention. FIG. (A) is a schematic diagram of acquiring the slide operation of the user on a page content when the page content is at the initial display position; FIG. (B) is a first schematic diagram of moving a page content in the preset direction to the one-hand operation area; FIG. (C) is a second schematic diagram of moving a page content in the preset direction to the one-hand operation area; FIG. (D) is a schematic diagram of moving a page content in the direction opposite to the preset direction when the page return instruction of the user in the one-hand operation area is received; FIG. (E) is a schematic diagram of moving a page content in the direction opposite to the preset direction at the preset first speed.

In an optional implementation manner, a two-dimensional coordinate system (x, y) may be established on the display screen, and then, coordinate points of the initial display position and the target display position may be acquired. Further optionally, the page content in the preset area of the display screen may be set as page content. As shown in FIG. 7 (A), page content in the area 701 in FIG. 7 (A) is set as page content M, and coordinates of a vertex A of the area 701 are set to (xA, yA), where A may be set as the initial display position; the preset slide displacement is P, and the displacement of the slide operation on the page content is set to L, where L is greater than P; and the preset direction is vertical down, and the magnitude of the moving displacement is S = L*α. In this case, the page content M is moved over S in the preset direction to the target display position B, and the schematic diagram shown in FIG. 7 (B) is obtained. The user may perform a one-hand operation in a one-hand operation area 702 shown in FIG. 7 (B). When the page return instruction of the user in the one-hand operation area is received, as shown in FIG. 7 (D), the page content is moved vertically up at the preset first speed, until the page content is moved to the initial display position. As shown in FIG. 7 (E), FIG. 7 (E) is a schematic diagram of moving the page content back to the initial display position A.

If the page content in all the areas of the display screen is set as page content, and page content in all the areas (including the status bar area) of the display screen in FIG. 7 (A) is set as page content N, a vertex A' on a status bar may be set as the initial display position; the preset slide displacement is P, and the displacement of the slide operation on the page content is set to L, where L is greater than P; and the preset direction is vertical down, and the magnitude of the moving displacement is S = L*α. In this case, the page content N is moved over S in the preset direction to the target display position C, and the schematic diagram shown in FIG. 7 (C) is obtained. The user may perform a one-hand operation in a one-hand operation area 703 shown in FIG. 7 (C).

According to the method for moving page content provided in this example of the present invention, on a mobile terminal with a large touchscreen, if it is detected that display content reaches a bottom or top of page content, the page content may be moved in a preset direction to a one-hand operation area according to a moving instruction, so that a user performs a one-hand operation in the one-hand operation area, thereby facilitating viewing and one-hand touch operations; and when a page return instruction is received, the page content is moved in a direction opposite to the preset direction at a preset first speed, and the page content may be moved from the one-hand operation area back to an initial display position at the preset first speed, thereby improving intelligence of the mobile terminal.

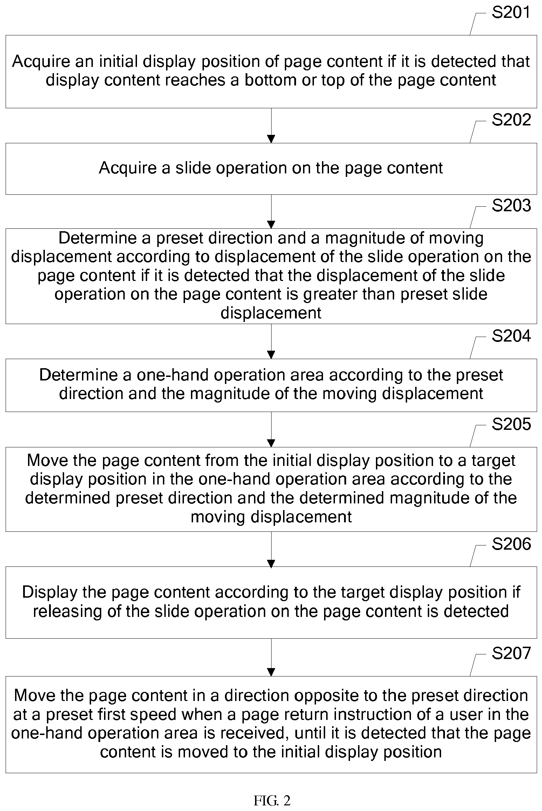

FIG. 2 is a flowchart of a method for moving page content according to an example. The method for moving page content, as shown in FIG. 2, is described by using a mobile terminal as an execution body. A procedure in this example shown in the figure includes steps S201 to S207.

S201. Acquire an initial display position of page content if it is detected that display content reaches a bottom or top of the page content.

S202. Acquire a slide operation on the page content.

S203. Determine a preset direction and a magnitude of moving displacement according to displacement of the slide operation on the page content if it is detected that the displacement of the slide operation on the page content is greater than preset slide displacement.

In an optional implementation manner, the preset slide displacement is a preset editable displacement value P (P is greater than 0). Further optionally, change values of position coordinates of a slide operation of a user on the page content may be acquired. A magnitude of the displacement of the slide operation is obtained by means of calculation according to the change values of the position coordinates of the slide operation, and then it is detected whether the displacement of the slide operation on the page content is greater than the preset slide displacement, and if it is determined that the displacement of the slide operation on the page content is greater than the preset slide displacement, the preset direction and the magnitude of the moving displacement are determined according to the displacement of the slide operation on the page content.

The preset direction may include a vertical direction or a horizontal direction. If it is detected that the mobile terminal adopts a portrait mode, and it is detected that the direction of the displacement of the slide operation on the page content is up or down, it is correspondingly determined that the preset direction is vertical up or vertical down; if it is detected that the mobile terminal adopts a landscape mode, and it is detected that the direction of the displacement of the slide operation on the page content is left or right, it is correspondingly determined that the preset direction is horizontal left or horizontal right. The magnitude of the moving displacement may include a product of a preset proportion factor and the displacement of the slide operation on the page content. The preset proportion factor is a preset editable value α (α is greater than 0), and the preset proportion factor may be specifically set for different mobile terminals. Further optionally, if the displacement of the slide operation on the page content is set to L, the magnitude of the moving displacement is S = L*α.

S204. Determine a one-hand operation area according to the preset direction and the magnitude of the moving displacement.

In an optional implementation manner, in step S201, the initial display position is acquired. Coordinates of a target display position may be determined according to the preset direction and the magnitude of the moving displacement, and an area that extends, in the preset direction, from the coordinates of the target display position to a bottom of a display screen is the one-hand operation area.

S205. Move the page content from the initial display position to the target display position in the one-hand operation area according to the determined preset direction and the determined magnitude of the moving displacement.

S206. Display the page content according to the target display position if releasing of the slide operation on the page content is detected.

In an optional implementation manner, the page content is displayed at the target display position if releasing of the slide operation on the page content is detected.

S207. Move the page content in a direction opposite to the preset direction at a preset first speed when a page return instruction of a user in the one-hand operation area is received, until it is detected that the page content is moved to the initial display position.

In an optional implementation manner, the page return instruction may include a return instruction that is received by the mobile terminal when the user performs operations such as a touch operation and a slide operation in any position in the one-hand operation area, or a return instruction that is received by the mobile terminal when the user touches a preset return button in the one-hand operation area, or the like. In other examples, the page return instruction is implemented in various manners, which is not specifically limited in this embodiment. After the page return instruction of the user in the one-hand operation area is received, the page content is moved in the direction opposite to the preset direction at the preset first speed, until it is detected that the page content is moved to the initial display position, where the preset first speed is a preset editable speed value V1, for example, V1 may be 2cm/s.

Further optionally, as shown in FIG. 7 (A), A is the initial display position of the page content; the displacement of the slide operation on the page content is L, and the preset slide displacement is P, where L is greater than P; and the preset direction is vertical down, and the magnitude of the moving displacement is S = L*α. In this case, the page content M is moved over S in the preset direction to the target display position B, and the schematic diagram shown in FIG. 7 (B) is obtained. The page content M is displayed at the target display position if releasing of the slide operation on the page content is detected. The user may perform a one-hand operation in the one-hand operation area 702 shown in FIG. 7 (B). When the page return instruction of the user in the one-hand operation area is received, where, for example, as shown in FIG. 7 (D), if an up moving instruction of the user is acquired and it is detected that up slide displacement is U, the up slide is determined as the page return instruction. After receiving the page return instruction, the mobile terminal moves the page content vertically up at the preset first speed, until the page content is moved to the initial display position. As shown in FIG. 7 (E), FIG. 7 (E) is a schematic diagram of moving the page content back to the initial display position A.

According to the method for moving page content provided in this example, on a mobile terminal with a large touchscreen, if it is detected that display content reaches a bottom or top of page content, the page content may be moved in a preset direction from an initial display position to a target display position in a one-hand operation area according to a moving instruction; when releasing of a slide operation on the page content is detected, the page content may be displayed according to the target display position, so that a user performs a one-hand operation in the one-hand operation area, thereby facilitating viewing and one-hand touch operations; and when a page return instruction is received, the page content is moved in a direction opposite to the preset direction at a preset first speed, and the page content may be moved from the target display position back to the initial display position at the preset first speed, thereby improving intelligence of the mobile terminal.

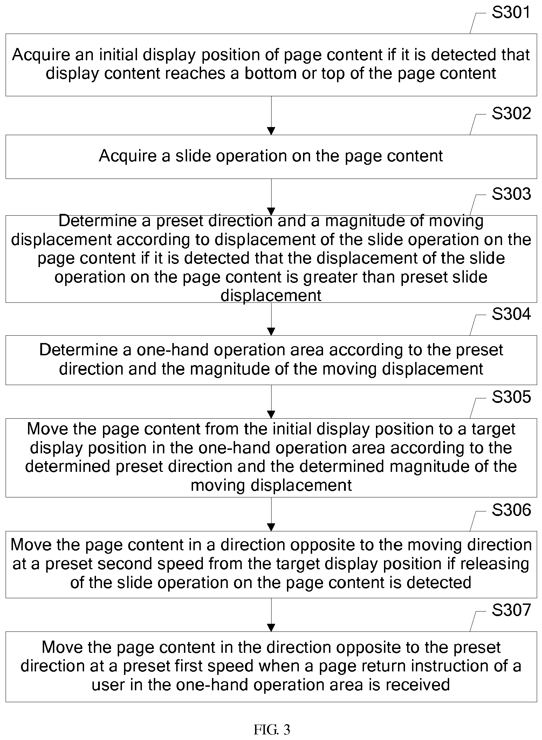

FIG. 3 is a flowchart of a method for moving page content according to a third example. The method for moving page content, as shown in FIG. 3, is described by using a mobile terminal as an execution body. A procedure in this example shown in the figure includes steps S301 to S307.

S301. Acquire an initial display position of page content if it is detected that display content reaches a bottom or top of the page content.

S302. Acquire a slide operation on the page content.

S303. Determine a preset direction and a magnitude of moving displacement according to displacement of the slide operation on the page content if it is detected that the displacement of the slide operation on the page content is greater than preset slide displacement.

In an optional implementation manner, the preset slide displacement is a preset editable displacement value P (P is greater than 0). Further optionally, change values of position coordinates of a slide operation of a user on the page content may be acquired. A magnitude of the displacement of the slide operation is obtained by means of calculation according to the change values of the position coordinates of the slide operation, and then it is detected whether the displacement of the slide operation on the page content is greater than the preset slide displacement, and if it is determined that the displacement of the slide operation on the page content is greater than the preset slide displacement, the preset direction and the magnitude of the moving displacement are determined according to the displacement of the slide operation on the page content.

The preset direction may include a vertical direction or a horizontal direction. If it is detected that the mobile terminal adopts a portrait mode, and it is detected that the direction of the displacement of the slide operation on the page content is up or down, it is correspondingly determined that the preset direction is vertical up or vertical down; if it is detected that the mobile terminal adopts a landscape mode, and it is detected that the direction of the displacement of the slide operation on the page content is left or right, it is correspondingly determined that the preset direction is horizontal left or horizontal right. The magnitude of the moving displacement may include a product of a preset proportion factor and the displacement of the slide operation on the page content. The preset proportion factor is a preset editable value α (α is greater than 0), and the preset proportion factor may be specifically set for different mobile terminals. Further optionally, if the displacement of the slide operation on the page content is set to L, the magnitude of the moving displacement is S = L*α.

S304. Determine a one-hand operation area according to the preset direction and the magnitude of the moving displacement.

In an optional implementation manner, in step S301, the initial display position is acquired. Coordinates of a target display position may be determined according to the preset direction and the magnitude of the moving displacement, and an area that extends, in the preset direction, from the coordinates of the target display position to a bottom of a display screen is the one-hand operation area.

S305. Move the page content from the initial display position to the target display position in the one-hand operation area according to the determined preset direction and the determined magnitude of the moving displacement.

S306. Move the page content in a direction opposite to the moving direction at a preset second speed from the target display position if releasing of the slide operation on the page content is detected.

In an optional implementation manner, the page content is moved in the direction opposite to the moving direction at the preset second speed from the target display position if releasing of the slide operation on the page content is detected, where the preset second speed is a preset editable speed value V2, for example, V2 may be 1.5cm/s.

S307. Move the page content in the direction opposite to the preset direction at a preset first speed when a page return instruction of a user in the one-hand operation area is received. The preset first speed is higher than the preset second speed.

In an optional implementation manner, the page return instruction may include a return instruction that is received by the mobile terminal when the user performs operations such as a touch operation and a slide operation in any position in the one-hand operation area, or a return instruction that is received by the mobile terminal when the user touches a preset return button in the one-hand operation area, or the like. In other examples, the page return instruction is implemented in various manners, which is not specifically limited in this example. After the page return instruction of the user in the one-hand operation area is received, the page content is moved in the direction opposite to the preset direction at the preset first speed, until it is detected that the page content is moved to the initial display position, where the preset first speed is a preset editable speed value V1, for example, V1 may be 2cm/s, and the preset first speed is higher than the preset second speed.

Further optionally, as shown in FIG. 7 (A), A is the initial display position of the page content; the displacement of the slide operation on the page content is L, and the preset slide displacement is P, where L is greater than P; and the preset direction is vertical down, and the magnitude of the moving displacement is S = L*α. In this case, the page content N is moved over S in the preset direction to the target display position C, and the schematic diagram shown in FIG. 7 (C) is obtained. The page content N is moved in the direction opposite to the moving direction at the preset second speed from the target display position if releasing of the slide operation on the page content N is detected. In this case, the user may perform a one-hand operation in the one-hand operation area 703 shown in FIG. 7 (C). When the page return instruction of the user in the one-hand operation area is received, the page content is moved vertically up at the preset first speed, until the page content is moved to the initial display position, where the preset first speed is higher than the preset second speed. As shown in FIG. 7 (E), FIG. 7 (E) is a schematic diagram of moving the page content back to the initial display position A.

According to the method for moving page content provided in this example, on a mobile terminal with a large touchscreen, if it is detected that display content reaches a bottom or top of page content, the page content may be moved in a preset direction from an initial display position to a target display position in a one-hand operation area according to a moving instruction, so that a user performs a one-hand operation in the one-hand operation area, thereby facilitating viewing and one-hand touch operations; if releasing of a slide operation on the page content is detected, the page content is moved in a direction opposite to the moving direction at a preset second speed from the target display position; and when a page return instruction is received, the page content is moved in the direction opposite to the preset direction at a preset first speed, where the preset first speed is higher than the preset second speed, and the page content may be moved from the target display position to the initial display position at the preset first speed, thereby improving intelligence of the mobile terminal.

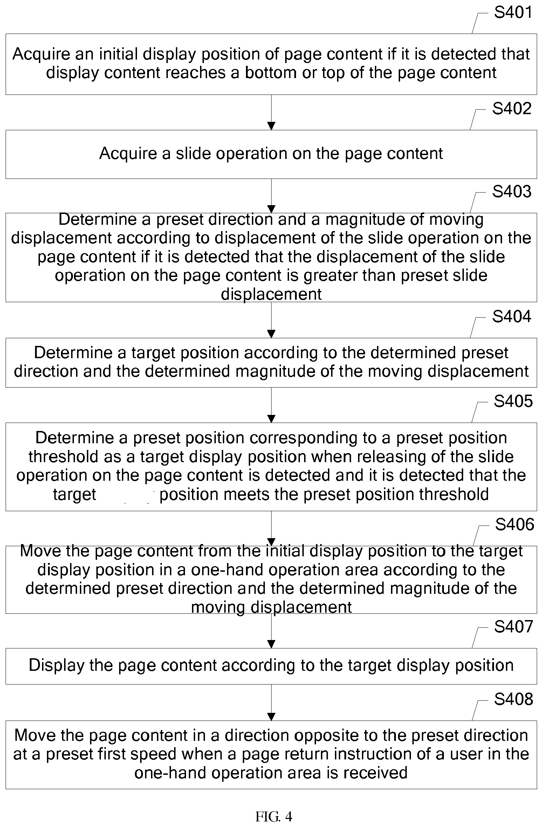

FIG. 4 is a flowchart of a method for moving page content according to a fourth embodiment of the present invention. The method for moving page content, as shown in FIG. 4, is described by using a mobile terminal as an execution body. A procedure in this embodiment shown in the figure includes steps S401 to S408.

S401. Acquire an initial display position of page content if it is detected that display content reaches a bottom or top of the page content.

S402. Acquire a slide operation on the page content.

S403. Determine a preset direction and a magnitude of moving displacement according to displacement of the slide operation on the page content if it is detected that the displacement of the slide operation on the page content is greater than preset slide displacement.

In an optional implementation manner, the preset slide displacement is a preset editable displacement value P (P is greater than 0). Further optionally, change values of position coordinates of a slide operation of a user on the page content may be acquired. A magnitude of the displacement of the slide operation is obtained by means of calculation according to the change values of the position coordinates of the slide operation, and then it is detected whether the displacement of the slide operation on the page content is greater than the preset slide displacement, and if it is determined the displacement of the slide operation on the page content is greater than the preset slide displacement, the preset direction and the magnitude of the moving displacement are determined according to the displacement of the slide operation on the page content.

The preset direction may include a vertical direction or a horizontal direction. If it is detected that the mobile terminal adopts a portrait mode, and it is detected that the direction of the displacement of the slide operation on the page content is up or down, it is correspondingly determined that the preset direction is vertical up or vertical down; if it is detected that the mobile terminal adopts a landscape mode, and it is detected that the direction of the displacement of the slide operation on the page content is left or right, it is correspondingly determined that the preset direction is horizontal left or horizontal right. The magnitude of the moving displacement may include a product of a preset proportion factor and the displacement of the slide operation on the page content. The preset proportion factor is a preset editable value α (α is greater than 0), and the preset proportion factor may be specifically set for different mobile terminals. Further optionally, if the displacement of the slide operation on the page content is set to L, the magnitude of the moving displacement is S = L*α.

S404. Determine a target position according to the determined preset direction and the determined magnitude of the moving displacement.

In an optional implementation manner, the initial display position is acquired in step S401, and coordinates of the target position may be determined according to the preset direction and the magnitude of the moving displacement. As shown in FIG. 7 (F), the target position is B.

S405. Determine a preset position corresponding to a preset position threshold as a target display position when releasing of the slide operation on the page content is detected and it is detected that the target position meets the preset position threshold.

In an optional implementation manner, the preset position corresponding to the preset position threshold is determined as a target display position if releasing of the slide operation on the page content is detected and it is detected that the end position meets the preset position threshold. As shown in FIG. 7 (F), the end position is B, and the preset position threshold includes: a value of a position between preset position E and F, and a value of a position between preset position F and G. Specifically, if |EA|< |BA| < |FA|, the preset position E is determined as the target display position. If |FA| < |BA| < |GA|, the preset position F is determined as the target display position. If |GA| < |BA|, the preset position G is determined as the target display position.

S406. Move the page content from the initial display position to the target display position in a one-hand operation area according to the determined preset direction and the determined magnitude of the moving displacement.

In an optional implementation manner, the one-hand operation area may be determined according to the target display position, and then the page content is moved from the initial display position to the one-hand operation area. Specifically, the page content is moved from the initial display position to the target display position in the one-hand operation area.

S407. Display the page content according to the target display position.

In an optional implementation manner, the page content is displayed according to the target display position. As shown in FIG. 7 (F), the end position is B, and the preset position threshold includes: a value of a position between preset position E and F, and a value of a position between preset position F and G. Specifically, if |EA| < |BA| < |FA|, the preset position E is determined as the target display position, and the page content is displayed starting from the preset position E. If IFAI < |BA| < |GA|, the preset position F is determined as the target display position, and the page content is displayed starting from the preset position F. If |GA| < |BA|, the preset position G is determined as the target display position, and the page content is displayed starting from the preset position G.

S408. Move the page content in a direction opposite to the preset direction at a preset first speed when a page return instruction of a user in the one-hand operation area is received.

In an optional implementation manner, the page return instruction may include a return instruction that is received by the mobile terminal when the user performs operations such as a touch operation and a slide operation in any position in the one-hand operation area, or a return instruction that is received by the mobile terminal when the user touches a preset return button in the one-hand operation area, or the like. In other embodiments, the page return instruction is implemented in various manners, which is not specifically limited in this embodiment. After the page return instruction of the user in the one-hand operation area is received, the page content is moved in the direction opposite to the preset direction at the preset first speed, until it is detected that the page content is moved to the initial display position, where the preset first speed is a preset editable speed value V1, for example, V1 may be 2cm/s.

Further optionally, as shown in FIG. 7 (A), A is the initial display position of the page content; the displacement of the slide operation on the page content is L, and the preset slide displacement is P, where L is greater than P; and the preset direction is vertical down, and the magnitude of the moving displacement is S = L*α. In this case, the page content N is moved over S in the preset direction to the target display position C, and the schematic diagram shown in FIG. 7 (C) is obtained. The preset position corresponding to the preset position threshold is determined as the target display position if releasing of the slide operation on the page content is detected and it is detected that the target position meets the preset position threshold, and the page content is displayed according to the target display position. As shown in FIG. 7 (F), if the target position is B, and meets the preset position threshold |EA| < |BA|< |FA|, the preset position E is determined as the target display position, and the page content N is displayed starting from the preset position E. In this case, the user may perform a one-hand operation on the page content as shown in FIG. 7 (F). When the page return instruction of the user in the one-hand operation area is received, the page content is moved vertically up at the preset first speed, until the page content is moved to the initial display position. As shown in FIG. 7 (E), FIG. 7(E) is a schematic diagram of moving the page content back to the initial display position A.

According to the method for moving page content provided in this embodiment of the present invention, on a mobile terminal with a large touchscreen, if it is detected that display content reaches a bottom or top of page content, the page content may be moved in a preset direction from an initial display position to a target display position in a one-hand operation area according to a moving instruction, and a target position may be determined according to the preset direction and a magnitude of moving displacement; if releasing of a slide operation on the page content is detected and it is detected that the target position meets a preset position threshold, a preset position corresponding to the preset position threshold is determined as the target display position, and the page content is displayed according to the target display position, so that a user performs a one-hand operation on the page content, thereby facilitating viewing and one-hand touch operations; and when a page return instruction is received, the page content is moved in a direction opposite to the preset direction at a preset first speed, and the page content may be moved from the target display position to the initial display position at the preset first speed, thereby improving intelligence of the mobile terminal.

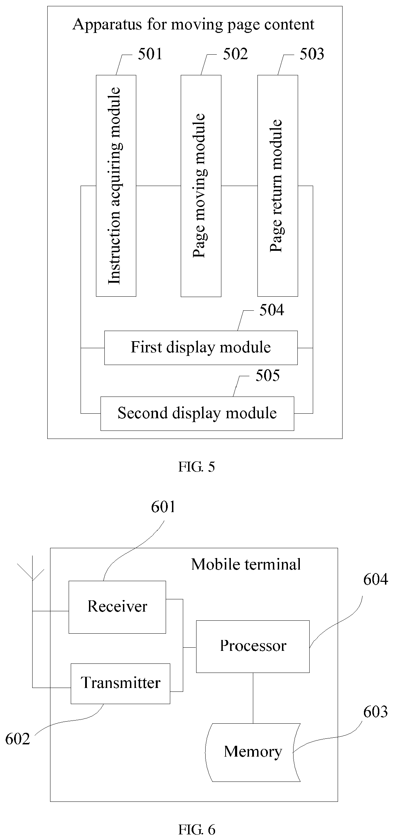

The following describes an apparatus for moving page content according to an embodiment of the present invention in detail with reference to FIG. 5.

It should be noted that, the apparatus for moving page content as shown in FIG. 5 is configured to perform the method in the embodiment of the present invention shown in any one of FIG. 1 to FIG. 4, and is an entity for performing the method for moving page content shown in any one of FIG. 1 to FIG. 4. For ease of description, only parts that are related to this embodiment of the present invention are shown. For specific technical details that are not disclosed, reference may be made to any embodiment shown in FIG. 1 to FIG. 4.

As shown in FIG. 5, FIG. 5 is a schematic structural diagram of an apparatus for moving page content according to an embodiment of the present invention. The apparatus for moving page content according to this embodiment of the present invention may include an instruction acquiring module 501, a page moving module 502, and a page return module 503.

The instruction acquiring module 501 is configured to acquire an instruction for moving page content if it is detected that display content reaches a bottom or top of the page content.

In an optional implementation manner, the instruction acquiring module 501 acquires the instruction for moving the page content if it is detected that the display content reaches the bottom or top of the page content. Further optionally, the instruction acquiring module 501 may include a slide operation acquiring unit and an instruction determining unit, where: the slide operation acquiring unit is configured to acquire a slide operation on the page content; and the instruction determining unit is configured to determine the acquired slide operation on the page content as the moving instruction when it is detected that displacement of the slide operation on the page content is greater than preset slide displacement. Specifically, the preset slide displacement is a preset editable displacement value P (P is greater than 0). Further optionally, change values of position coordinates of a slide operation of a user on the page content may be acquired. A magnitude of the displacement of the slide operation is obtained by means of calculation according to the change values of the position coordinates of the slide operation, and then it is detected whether the displacement of the slide operation on the page content is greater than the preset slide displacement, and if it is determined the displacement of the slide operation on the page content is greater than the preset slide displacement, the acquired slide operation on the page content is determined as the moving instruction.

The page moving module 502 is configured to move the page content in a preset direction to a one-hand operation area according to the moving instruction acquired by the instruction acquiring module 501.

In an optional implementation manner, the page moving module 502 moves the page content in the preset direction to the one-hand operation area according to the moving instruction. Further optionally, the page moving module 502 may include a moving displacement determining unit and a one-hand area determining unit, where: the moving displacement determining unit is configured to determine the preset direction and a magnitude of moving displacement according to the displacement of the slide operation on the page content; and the one-hand area determining unit is configured to determine the one-hand operation area according to the preset direction and the magnitude of the moving displacement. Specifically, the preset direction may include a vertical direction or a horizontal direction. If it is detected that a mobile terminal adopts a portrait mode, and it is detected that the direction of the displacement of the slide operation on the page content is up or down, it is correspondingly determined that the preset direction is vertical up or vertical down; if it is detected that the mobile terminal adopts a landscape mode, and it is detected that the direction of the displacement of the slide operation on the page content is left or right, it is correspondingly determined that the preset direction is horizontal left or horizontal right. The magnitude of the moving displacement may include a product of a preset proportion factor and the displacement of the slide operation on the page content. The preset proportion factor is a preset editable value α (α is greater than 0), and the preset proportion factor may be specifically set for different mobile terminals. Further optionally, if the displacement of the slide operation on the page content is set to L, the magnitude of the moving displacement is S = L*α.

Further optionally, the page moving module 502 may include a position acquiring unit and a moving unit, where: the position acquiring unit is configured to acquire an initial display position of the page content; a moving displacement determining unit is configured to determine the preset direction and a magnitude of moving displacement according to the displacement of the slide operation on the page content; and the moving unit is configured to move the page content from the initial display position to a target display position in the one-hand operation area according to the determined preset direction and the determined magnitude of the moving displacement. Specifically, the initial display position of the page content is acquired, where the initial display position may be a preset position at the top of the page content. For example, if the page content is page content in all areas of a display screen, a position at a top (namely, a top of a status bar area) of the display screen may be set as the initial display position. Referring to FIG. 7, FIG. 7 is a schematic diagram of moving page content according to an embodiment of the present invention. As shown in FIG. 7 (A), if the page content is page content in all the areas of the display screen, A' may be set as the initial display position. Further optionally, if the page content is page content in a preset area of a display screen, a preset position at a top of the preset area of the display screen may be set as the initial display position. As shown in FIG. 7 (A), if the page content is the page content in the preset area, that is, an area 701, of the display screen, A may be set as the initial display position. The target display position may be a position determined according to the preset direction and the magnitude of the moving displacement, and the target display position is in the one-hand operation area. Specifically, for example, coordinates of the initial display position of the page content may be acquired. Coordinates of the target display position may be determined according to the preset direction and the magnitude of the moving displacement, and an area that extends, in the preset direction, from the coordinates of the target display position to a bottom of the display screen is the one-hand operation area.

The page return module 503 is configured to move the page content in a direction opposite to the preset direction at a preset first speed when a page return instruction of the user in the one-hand operation area is received.

In an optional implementation manner, the page return module 503 moves the page content in the direction opposite to the preset direction at the preset first speed when the page return instruction of the user in the one-hand operation area is received. Specifically, the page return instruction may include a return instruction that is received by the mobile terminal when the user performs operations such as a touch operation and a slide operation in any position in the one-hand operation area, or a return instruction that is received by the mobile terminal when the user touches a preset return button in the one-hand operation area, or the like. In other embodiments, the page return instruction is implemented in various manners, which is not specifically limited in this embodiment. The page return module 503 is specifically configured to move the page content in the direction opposite to the preset direction at the preset first speed, until it is detected that the page content is moved to the initial display position, where the preset first speed is a preset editable speed value V1, for example, V1 may be 2cm/s.

In an optional implementation manner, the page content in the preset area of the display screen may be set as page content. As shown in FIG. 7 (A), page content in the area 701 in FIG. 7 (A) is set as page content M, and coordinates of a vertex A of the area 701 are set to (xA, yA), where A may be set as the initial display position; the preset slide displacement is P, and the displacement of the slide operation on the page content is set to L, where L is greater than P; and the preset direction is vertical down, and the magnitude of the moving displacement is S = L*α. In this case, the page content M is moved over S in the preset direction to the target display position B, and a schematic diagram shown in FIG. 7 (B) is obtained. The user may perform a one-hand operation in a one-hand operation area 702 shown in FIG. 7 (B). When the page return instruction of the user in the one-hand operation area is received, where for example, as shown in FIG. 7 (D), if an up moving instruction of the user is acquired and it is detected that up slide displacement is U, the up slide is determined as the page return instruction. After receiving the page return instruction, the mobile terminal moves the page content vertically up at the preset first speed until the page content is moved to the initial display position. As shown in FIG. 7 (E), FIG. 7 (E) is a schematic diagram of moving the page content back to the initial display position A.

If the page content in all the areas of the display screen is set as page content, and page content in all the areas (including the status bar area) of the display screen in FIG. 7 (A) is set as page content N, A' may be set as the initial display position; the preset slide displacement is P, and the displacement of the slide operation on the page content is set to L, where L is greater than P; and the preset direction is vertical down, and the magnitude of the moving displacement is S = L*α. In this case, the page content N is moved over S in the preset direction to the target display position C, and a schematic diagram shown in FIG. 7 (C) is obtained. The user may perform a one-hand operation in a one-hand operation area 703 shown in FIG. 7 (C).

In an optional implementation manner, the page return module 503 may be further configured to: move the page content in the direction opposite to the moving direction at a preset second speed from the target display position if releasing of the slide operation on the page content is detected, where the preset second speed is lower than the preset first speed. Specifically, the page content is moved in the direction opposite to the moving direction at the preset second speed from the target display position if releasing of the slide operation on the page content is detected, where the preset second speed is a preset editable speed value V2, for example, V2 may be 1.5cm/s.

Further optionally, the apparatus for moving page content according to this embodiment of the present invention may include a first display module 504.

The first display module 504 is configured to display the page content according to the target display position if releasing of the slide operation on the page content is detected.

In an optional implementation manner, the page content is displayed at the target display position if releasing of the slide operation on the page content is detected. As shown in the schematic diagram shown in FIG. 7 (B), the page content M is displayed at the target display position if releasing of the slide operation on the page content is detected. The user may perform a one-hand operation in the one-hand operation area 702 shown in FIG. 7 (B).

Further optionally, the apparatus for moving page content according to this embodiment of the present invention may include a second display module 505.

Further optionally, the moving unit is specifically configured to: determine a target position according to the determined preset direction and the determined magnitude of the moving displacement; and determine a preset position corresponding to a preset position threshold as the target display position when releasing of the slide operation on the page content is detected and it is detected that the target display position meets the preset position threshold.

The second display module 505 is configured to display the page content according to the target display position.

In an optional implementation manner, the preset position corresponding to the preset position threshold is determined as the target display position if releasing of the slide operation on the page content is detected and it is detected that the end position meets the preset position threshold. As shown in FIG. 7 (F), the end position is B, and the preset position threshold includes: a value of a position between preset position E and F, and a value of a position between preset position F and G. Specifically, if |EA| < |BA| < IFAI, the preset position E is determined as the target display position, and the page content is displayed starting from the preset position E. If IFAI < |BA| < |GA|, the preset position F is determined as the target display position, and the page content is displayed starting from the preset position F. If |GA| < |BA|, the preset position G is determined as the target display position, and the page content is displayed starting from the preset position G.

Further optionally, as shown in FIG. 7 (F), if the end position is B, and meets the preset position threshold |EA|< |BA|< |FA|, the preset position E is determined as the target display position, and the page content N is displayed starting from the preset position E. In this case, the user may perform a one-hand operation on the page content as shown in FIG. 7 (F).

According to the apparatus for moving page content provided in this embodiment of the present invention, on a mobile terminal with a large touchscreen, if it is detected that display content reaches a bottom or top of page content, an instruction acquiring module may acquire an instruction for moving page content on a display screen; a page moving module may move the page content in a preset direction to a one-hand operation area according to the moving instruction, so that a user performs a one-hand operation in the one-hand operation area, thereby facilitating viewing and one-hand touch operations; and a page return module moves the page content in a direction opposite to the preset direction at a preset first speed when a page return instruction is received, and the page content may be moved from the one-hand operation area to an initial display position at the preset first speed, thereby improving intelligence of the mobile terminal.

It should be noted that, the instruction acquiring module, the page moving module, and the page return module in this embodiment may be processors that are disposed separately or may be integrated into a processor of the mobile terminal for implementation, or may be stored in a memory of the mobile terminal in a form of program code and invoked by a processor of the mobile terminal to execute functions of the foregoing modules. The first display module and the second display module are implemented in the same way as the foregoing modules, and may be integrated with the foregoing modules, or may be implemented separately. Herein the processor may be a central processing unit (Central Processing Unit, CPU), or a specific integrated circuit (Application-Specific Integrated Circuit, ASIC), or is configured as one or more integrated circuits for implementing this embodiment of the present invention.

Referring to FIG. 6, FIG. 6 is a schematic structural diagram of a mobile terminal according to an embodiment of the present invention. The mobile terminal provided in this embodiment corresponds to the method shown in any one of FIG. 1 to FIG. 4, and is an entity for performing the method for moving page content shown in any one of FIG. 1 to FIG. 4. A specific implementation form is shown in FIG. 6. The mobile terminal in this embodiment of the present invention may include a receiver 601, a transmitter 602, a memory 603, and a processor 604, where the receiver 601, the transmitter 602, and the memory 603 are all connected to the processor 604, for example, may be connected by using a bus. Certainly, network element devices may further include universal components such as an antenna, a baseband processing component, an intermediate radio frequency processing component, and input and output apparatuses, which is not specifically limited in this embodiment of the present invention.

The receiver 601 and the transmitter 602 may be integrated to constitute a transceiver.

The memory 603 is configured to store executable program code, where the program code includes a computer operation instruction. The memory 603 may include a high-speed random access memory (RAM), or may include a non-volatile memory (non-volatile memory), for example, at least one disk memory.

The processor 604 may be a central processing unit, or a specific integrated circuit, or is configured as one or more integrated circuits for implementing this embodiment of the present invention.

The memory 603 stores a group of program code, and the processor 604 is configured to invoke the program code stored in the memory 603 to perform the steps of the claimed methods.

In the foregoing technical solution, a mobile terminal is provided, and includes a receiver, a transmitter, a memory, and a processor. On the mobile terminal with a large touchscreen, if it is detected that display content reaches a bottom or top of the page content, the processor may move the page content in a preset direction to a one-hand operation area according to a moving instruction, so that a user performs a one-hand operation in the one-hand operation area, thereby facilitating viewing and one-hand touch operations; and when a page return instruction is received, the page content is moved in a direction opposite to the preset direction at a preset first speed, and the page content may be moved from the one-hand operation area back to an initial display position at the preset first speed, thereby improving intelligence of the mobile terminal.

In summary, according to the method and apparatus for moving page content provided in the embodiments of the present invention, on a mobile terminal with a large touch screen, if it is detected that display content reaches a bottom or top of page content, the page content may be moved in a preset direction from an initial display position to a target display position in a one-hand operation area according to a moving instruction, so that a user performs a one-hand operation in the one-hand operation area, thereby facilitating viewing and one-hand touch operations. Further optionally, when releasing of a slide operation on the page content is detected, the page content may be displayed according to the target display position. Further optionally, if releasing of the slide operation on the page content is detected, the page content is moved in a direction opposite to the moving direction at a preset second speed from the target display position. Further optionally, a target position may be determined according to the preset direction and a magnitude of moving displacement; if releasing of the slide operation on the page content is detected and it is detected that the target position meets a preset position threshold, a preset position corresponding to the preset position threshold is determined as the target display position; and the page content is displayed according to the target display position. When a page return instruction is received, the page content is moved in the direction opposite to the preset direction at a preset first speed, and the page content may be moved from the one-hand operation area back to the initial display position at the preset first speed, thereby improving intelligence of the mobile terminal.

In the several embodiments provided in the present application, it should be understood that the disclosed apparatus and method may be implemented in other manners. For example, the described apparatus embodiment is merely exemplary. For example, the module or unit division is merely logical function division and may be other division in actual implementation. For example, a plurality of units or modules may be combined or integrated into another system, or some features may be ignored or not performed. In addition, the displayed or discussed mutual couplings or direct couplings or communication connections may be implemented by using some interfaces. The indirect couplings or communication connections between the apparatuses, modules, or units may be implemented in electronic, mechanical, or other forms.

The modules or units described as separate parts may or may not be physically separate, and parts displayed as modules or units may or may not be physical modules or units, may be located in one position, or may be distributed on a plurality of network modules or units. A part or all of the modules or units may be selected according to actual needs to achieve the objectives of the solutions of the embodiments of the present application.

In addition, functional modules or units in the embodiments of the present application may be integrated into one processing module or unit, or each of the modules or units may exist alone physically, or two or more modules or units are integrated into one module or unit. The integrated modules or units may be implemented in a form of hardware, or may be implemented in a form of a software functional unit.

When the integrated module or unit is implemented in the form of a software functional module or unit and sold or used as an independent product, the integrated module or unit may be stored in a computer-readable storage medium. Based on such an understanding, the technical solutions of the present application essentially, or the part contributing to the prior art, or all or a part of the technical solutions may be implemented in a form of a software product. The software product is stored in a storage medium and includes several instructions for instructing a computer device (which may be a personal computer, a server, or a network device) to perform all or a part of the steps of the methods in the embodiments of the present application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present application, but are not intended to limit the protection scope of the present application. Any modification or replacement readily figured out by a person skilled in the art within the technical scope disclosed in the present application shall fall within the protection scope of the present application. Therefore, the protection scope of the present application shall be subject to the protection scope of the claims.

## Claims

1. A method for moving page content, wherein the method comprises:
acquiring an initial display position of page content if it is detected that display content reaches a bottom or top of the page content (S401);
acquiring a slide operation of a user on the page content (S 402);
determining a preset direction and a magnitude of moving displacement according to the displacement of the slide operation on the page content if it is detected that the displacement of the slide operation on the page content is greater than a preset slide displacement (S 403); determining a target position according to the determined preset direction and the determined magnitude of the moving displacement (S 404);
determining a preset position corresponding to a preset position threshold as a target display position if releasing of the slide operation on the page content is detected and it is detected that the target position meets the preset position threshold (S 405);
moving the page content from the initial display position to the target display position in a one-hand operation area according to the determined preset direction and the determined magnitude of the moving displacement (S 406);
displaying the page content at the target display position (S 407);
moving the page content in a direction opposite to the preset direction at a preset first speed when a page return instruction of the user in the one-hand operation area is received (S 408).

2. The method according to claim 1, wherein the preset direction comprises a vertical direction or a horizontal direction; and
the magnitude of the moving displacement comprises a product of a preset proportion factor and the displacement of the slide operation on the page content.

3. The method according to any one of claims 1 to 2, wherein the page content comprises page content in a preset area of a display screen or page content in all areas of the display screen.

4. An apparatus configured to perform any of the methods according to claims 1 - 3.

## Patentansprüche

1. Verfahren zum Bewegen eines Seiteninhalts, wobei das Verfahren Folgendes umfasst:
Erfassen einer Anzeigeanfangsposition eines Seiteninhalts, wenn detektiert wird, dass ein Anzeigeinhalt eine Unterseite oder Oberseite des Seiteninhalts erreicht (S 401);
Erfassen eines Gleitvorgangs eines Benutzers auf dem Seiteninhalt (S 402);
Bestimmen einer voreingestellten Richtung und einer Größe eines Bewegungsversatzes gemäß dem Versatz des Gleitvorgangs auf dem Seiteninhalt, wenn detektiert wird, dass der Versatz des Gleitvorgangs auf dem Seiteninhalt größer ist als ein voreingestellter Gleitversatz (S 403);
Bestimmen einer Sollposition gemäß der bestimmten voreingestellten Richtung und der bestimmten Größe des Bewegungsversatzes (S 404);
Bestimmen einer voreingestellten Position, die einem voreingestellten Positionsschwellwert entspricht, als eine Anzeigesollposition, wenn ein Freigeben des Gleitvorgangs auf dem Seiteninhalt detektiert wird und wenn detektiert wird, dass die Sollposition den voreingestellten Positionsschwellwert erfüllt (S 405);
Bewegen des Seiteninhalts von der Anzeigeanfangsposition zur Anzeigesollposition in einem Einhandvorgangsbereich gemäß der bestimmten voreingestellten Richtung und der bestimmten Größe des Bewegungsversatzes (S 406);
Anzeigen des Seiteninhalts in der Anzeigesollposition (S 407);
Bewegen des Seiteninhalts in eine Richtung, die der voreingestellten Richtung entgegengesetzt ist, mit einer voreingestellten ersten Geschwindigkeit, wenn eine Seitenrückkehranweisung des Benutzers im Einhandvorgangsbereich empfangen wird (S 408).

2. Verfahren nach Anspruch 1, wobei die voreingestellte Richtung eine vertikale Richtung oder eine horizontale Richtung umfasst und
die Größe des Bewegungsversatzes ein Produkt aus einem voreingestellten Proportionsfaktor und dem Versatz des Gleitvorgangs auf dem Seiteninhalt umfasst.

3. Verfahren nach einem der Ansprüche 1 bis 2, wobei der Seiteninhalt einen Seiteninhalt in einem voreingestellten Bereich eines Anzeigebildschirms oder einen Seiteninhalt in allen Bereichen des Anzeigebildschirms umfasst.

4. Vorrichtung, die dazu ausgelegt ist, eines der Verfahren nach den Ansprüchen 1-3 durchzuführen.

## Revendications

1. Procédé de déplacement d'un contenu de page, le procédé comprenant de :
acquérir une position d'affichage initiale d'un contenu de page s'il est détecté que le contenu d'affichage atteint le bas ou le haut du contenu de page (S 401) ;
acquérir une opération de glissement d'un utilisateur sur le contenu de page (S 402) ;
déterminer une direction prédéfinie et une amplitude de déplacement en fonction du déplacement de mouvement de l'opération de glissement sur le contenu de page s'il est détecté que le déplacement de l'opération de glissement sur le contenu de page est supérieur à un déplacement de glissement prédéfini (S 403) ;
déterminer une position cible en fonction de la direction prédéfinie déterminée et de l'amplitude déterminée du déplacement de mouvement (S 404) ;
déterminer une position prédéfinie correspondant à un seuil de position prédéfinie en tant que position d'affichage cible si l'abandon de l'opération de glissement sur le contenu de page est détecté et s'il est détecté que la position cible atteint le seuil de position prédéfinie (S 405) ;
déplacer le contenu de page à partir de la position d'affichage initiale vers la position d'affichage cible dans une zone d'opération à une main en fonction de la direction prédéfinie déterminée et de l'amplitude déterminée du déplacement de mouvement (S 406);
afficher le contenu de la page à la position d'affichage cible (S 407) ;
déplacer le contenu de page dans une direction opposée à la direction prédéfinie à une première vitesse prédéfinie lorsqu'une instruction de retour de page de l'utilisateur dans la zone d'opération à une main est reçue (S 408).

2. Procédé selon la revendication 1, dans lequel la direction prédéfinie comprend une direction verticale ou une direction horizontale ; et
l'amplitude du déplacement de mouvement comprend le produit d'un facteur de proportion prédéfini et du déplacement de l'opération de glissement sur le contenu de page.

3. Procédé selon l'une quelconque des revendications 1 à 2, dans lequel le contenu de page comprend un contenu de page dans une zone prédéfinie d'un écran d'affichage ou un contenu de page dans toutes les zones de l'écran d'affichage.

4. Appareil configuré pour exécuter l'un quelconque des procédés selon les revendications 1 à 3.
